Europäisches Patentamt

European Patent Office

Office européen des brevets

(19)

(11) Veröffentlichungsnummer: **0 322 610**
**A1**

## EUROPÄISCHE PATENTANMELDUNG

(21) Anmeldenummer: **88120515.7**

(22) Anmeldetag: **08.12.88**

(51) Int. Cl.4 **C09D 5/44**

(30) Priorität: **21.12.87 AT 3372/87**

(43) Veröffentlichungstag der Anmeldung:
**05.07.89 Patentblatt 89/27**

(84) Benannte Vertragsstaaten:
**DE ES FR IT**

(71) Anmelder: **Vianova Kunstharz Aktiengesellschaft**

**A-8402 Werndorf(AT)**

(72) Erfinder: **Paar, Willibald, Dr.**
**Schanzelgasse 19**
**A-8010 Graz(AT)**

(54) **Verfahren zur Vernetzung von kationischen Lackbindemitteln und dafür eingesetzte Vernetzungskomponenten enthaltende Lackbindemittel.**

(57) Die Erfindung betrifft ein Verfahren zur Vernetzung von kationischen Lackbindemitteln, insbesonders von kathodisch abscheidbaren Lacken durch (Poly)-2-hydroxyalkylharnstoffverbindungen.

Die 2-Hydroxyalkylharnstoffe werden durch Umsetzung von organischen Di- oder Polyisocyanaten mit sekundären $\beta$-Hydroxyalkylaminen erhalten.

Die beanspruchten Vernetzungsmittel gestatten nicht nur die Filmbildung in dem für Wasserlacke besonders günstigen Einbrennbereich von etwa 140°C, sondern auch eine selektivere Halbblockierung durch den im Vergleich zu Hydroxylgruppen ausgeprägteren Reaktivitätsunterschied der NCO-Gruppen einzelner Diisocyanate gegenüber den sekundären Aminogruppen.

EP 0 322 610 A1

## Verfahren zur Vernetzung von kationischen Lackbindemitteln und dafür eingesetzte Vernetzungskomponenten enthaltende Lackbindemittel

Die Erfindung betrifft ein Verfahren zur Vernetzung von kationischen Lackbindemitteln, insbesonders von kathodisch abscheidbaren Lacken, durch (Poly)-2-hydroxyalkyl- harnstoffverbindungen.

Es ist bekannt, kationische Lackbindemittel, wie sie vor allem für die Elektrotauchlackierung eingesetzt werden, durch blockierte Polyisocyanatverbindungen bei erhöhter Temperatur zu vernetzen. Die Vernetzungskomponente kann dabei in Form einer blockierten Polyisocyanatverbindung in Mischung mit dem Hauptbindemittel vorliegen, wie dies in vielen Literaturstellen, z. B. der DE-OS 20 57 799 beschrieben wird. Die blockierten Isocyanatgruppen können aber auch durch Reaktion von halbblockierten Diisocyanaten mit entsprechenden funktionellen Gruppen des Bindemittels umgesetzt werden. In diesem Fall resultieren selbstvernetzende Bindemittel (siehe beispielsweise die DE-OS 22 52 536 und viele andere).

Als Blockierungsmittel dienen dabei in den meisten Fällen aliphatische Monoalkohole, vor allem 2-Ethylhexanol, aber auch Glykolmonoether oder niedere Alkohole wie Methanol oder Ethanol (siehe z. B. die obengenannte DE-OS 22 52 536 oder die EP-A- 192 113). Die Entblockungstemperatur liegt in allen diesen Fällen relativ hoch und kann auch bei Verwendung von Katalysatoren nicht unter 170° C gesenkt werden.

Bei einer anderen Gruppe von Vernetzungskomponenten erfolgt die Filmbildung durch Umesterung oder Umamidierung von Poly-β-hydroxyalkylesterverbindungen, wie β-Hydroxyalkylestern (EP-A- 131 125), β-Amidoalkylestern (DE-A-32 24 864) oder Carbalkoxymethylestern (EP-A-102 501) mit den Hydroxyl- oder Aminogruppen des Bindemittelpartners. Auch in diesen Fällen ist für eine ausreichende Vernetzung eine Einbrenntemperatur von mindestens 160° C notwendig. Überdies enthält der Film wesentliche Anteile von hydrolisierbaren Estergruppen, was zu einer Verminderung der Korrosionsfestigkeit der Filme führt.

Es wurde nun gefunden, daß man kationische Bindemittel bereits bei 140° C unter Ausbildung von Überzügen mit ausgezeichneten Eigenschaften vernetzen kann, wenn man für die Vernetzungsreaktion als 2-Hydroxyalkylharnstoffe blockierte Isocyanatgruppen heranzieht.

Die Erfindung betrifft demgemäß ein Verfahren zur Vernetzung von kationischen Lackbindemitteln, insbesonders von kathodisch abscheidbaren Überzugsmitteln, durch blockierte Isocyanatgruppen unter Abspaltung des Blockierungsmittels bei erhöhter Temperatur, welches dadurch gekennzeichnet ist, daß man als Vernetzungskomponente einen 2-Hydroxyalkylharnstoff, welcher durch vollständige oder partielle Reaktion einer organischen Di- oder Polyisocyanatverbindung mit einem sekundären β-Hydroxyalkylamin erhalten wurde, einsetzt, wobei gegebenenfalls die bei der partiellen Umsetzung freigebliebenen Isocyanatgruppen mit NCO-reaktiven Gruppen des Bindemittelpartners unter Bildung eines selbstvernetzenden Bindemittels umgesetzt werden.

Weiterhin betrifft die Erfindung kationische Lackbindemittel, die mit sekundären β-Hydroxyalkylaminen blok kierte Isocyanatverbindungen als Vernetzungskomponente in Mischung oder als partielles Reaktionsprodukt mit dem Bindemittelpartner enthalten.

Die beanspruchten Vernetzungsmittel gestatten nicht nur die Filmbildung in dem für Wasserlacke besonders günstigen Einbrennbereich von etwa 140° C, sondern gestatten auch eine selektivere Halbblockierung durch den im Vergleich zu Hydroxylgruppen ausgeprägteren Reaktivitätsunterschied der NCO-Gruppen einzelner Diisocyanate gegenüber den sekundären Aminogruppen.

Die 2-Hydroxyalkylharnstoffe werden durch Umsetzung von organischen Di- oder Polyisocyanaten mit sekundären β-Hydroxyalkylaminen erhalten.

Für die Vernetzungskomponenten, die in Form von vollständig blockierten Di- oder Polyisocyanaten dem Bindemittelpartner zugemischt werden, können alle üblichen Diisocyanate, Triisocyanate oder Polyisocyanate, sowie die Präpolymeren dieser Verbindungen mit Polyolen eingesetzt werden. Aliphatische und aromatische Di-, Tri-und Polyisocyanate sind in großer Zahl bekannt und im Handel unter verschiedenen Markenbezeichnungen erhältlich.

Für den Einbau von Vernetzungsfunktionen zur Herstellung von selbstvernetzenden Bindemitteln werden zur Bildung der partiell blockierten Isocyanatverbindungen bevorzugt Diisocyanate herangezogen, deren Isocyanatgruppen eine unterschiedliche Reaktivität aufweisen. Bevorzugt werden dafür das Isophorondiisocyanat bzw. das 2,4-Toluylendiisocyanat eingesetzt. Vom letzteren kann dabei natürlich auch die handelsübliche Isomerenmischung mit einem ca. 20%igen Anteil an 2,6-Toluylendiisocyanat verwendet werden.

Als sekundäre β-Hydroxyalkylamine dienen N-Alkyl-alkanolamine, wie das N-Methylethanolamin und seine Homologen. Weiters können auch Umsetzungsprodukte von Monoepoxidverbindungen, wie Glycidylestern oder Glycidylethern, mit primären Aminen dafür eingesetzt werden. Vorzugsweise sollen die β-Hydroxyalkylamine bei der Entblockierungstemperatur flüchtig sein. Nichtflüchtige Blockierungsmittel können in manchen Fällen die Filmbildungscharakteristik positiv beeinflussen, dürfen aber keinen negativen Einfluß auf die Beständigkeitseigenschaften zeigen.

Die Blockierung der NCO-Gruppen mit sekundären β-Hydroxyalkylaminen unter Bildung der 2-Hydroxyalkylharnstoffe erfolgt bereits bei Temperaturen ab 10° C. Die Vollblockierung erfolgt vorzugsweise bei 30 bis 40° C. Bei der Teilblockierung werden vorzugsweise Temperaturen von 10 - 25° C angewandt. Die Reaktion findet bevorzugt in Gegenwart eines reaktionsinerten Lösemittels, z B. von Methylisobutylketon oder eines Glykoldiethers statt.

Vollblockierte Vernetzungskomponenten werden in einem Verhältnis von 15 bis 40 Gew.-%, bezogen auf das Gesamtbindemittel eingesetzt. Bei selbstvernetzenden Bindemitteln muß der Anteil an 2-Hydroxyalkylharnstoffgruppen eine ausreichende Vernetzung nach deren Entblockung gewährleisten.

Als Hauptkomponente des Bindemittels oder der Bindemittelkombination sind prinzipiell stickstoffbasische Gruppen tragende Polyadditions-, Polykondensations- und Polymerisationsprodukte geeignet, wie sie in großer Zahl dem Fachmann bekannt oder der reichhaltigen Literatur auf diesem Gebiet zu entnehmen sind. Auch die Auswahlkriterien, wie eine ausreichende Zahl von NCO-reaktiven Gruppen in diesen Bindemitteln, sind dem Fachmann bekannt.

Die Lackbindemittelkombinationen werden durch zumindest teilweise Salzbildung mit Säuren wasserlöslich gemacht und gegebenenfalls mit Pigmenten, Füllstoffen und anderen Lackhilfsmitteln in bekannter Weise verarbeitet.

Die Lackbindemittelkombinationen, die die erfindungsgemäß eingesetzten Vernetzungskomponenten aufweisen, enthalten vorteilhafterweise Vernetzungskatalysatoren, vorzugsweise organische Bleiverbindungen, wie Bleioctoat oder Bleinaphthenat.

Für den Einsatz im Elektrotauchlackierverfahren erfolgt die Herstellung der Lacke in der üblichen Form. Beim Einsatz einer getrennten Vernetzungskomponente erfolgt der Zusatz vorteilhaft vor dem Verdünnen mit Wasser.

Das folgende Beispiel erläutert die Erfindung, ohne sie in ihrem Umfang zu beschränken. Alle Angaben in Teilen oder Prozenten beziehen sich, soferne nichts anderes angegeben ist, auf Gewichtseinheiten.

Beispiel :

In einem geeigneten Reaktionsgefäß werden 863 Tle einer 70%igen Lösung in Diethylenglykol eines Toluylendiisocyanat-Trimethylolpropan-Präpolymeren (Molverhältnis 2,7 : 1) mit 203 Tlen (2,7 Mol) Methylethanolamin bei 30 bis 40° C bis zur vollständigen Umsetzung der NCO-Gruppen reagiert.

30 Tle (Feststoff) dieser Vernetzungskomponente werden mit 70 Tlen (Feststoff) eines modifizierten kationischen Epoxidharzes (siehe unten) gemischt und mit 1 % Blei (als Bleioctoat) versetzt. Nach Zugabe von 45 mMol Ameisensäure (pro 100 g Feststoff) wird durch Verdünnung mit deionisiertem Wasser ein Klarlack mit einem Feststoffgehalt von 15 Gew.-% hergestellt.

Ein aus diesem Klarlack kathodisch abgeschiedener Film wird 30 Minuten bei 140° C eingebrannt. Der resultierende Lackfilm weist bei einer Trockenfilmstärke von 20 ± 2 μm eine Beständigkeit gegenüber Methylethylketon von ca. 400 Doppelhüben auf.

Wird anstelle der erfindungsgemäßen Blockierung 2-Ethylhexanol als Blockierungsmittels verwendet, wird eine gleichwertige Beständigkeit erst bei einer Einbrenntemperatur von 185° C erreicht.

Das modifizierte kationische Epoxidharz wird in folgender Weise hergestellt:

500 Tle eines Epoxidharzes auf Basis von Bisphenol A (Epoxidäquivalentgewicht ca. 500) werden in 214 Tlen Propylenglykolmonomethylether gelöst und bei 110° C mit 83 Tlen eines Halbesters aus Phthalsäureanhydrid und 2-Ethylhexanol in Gegenwart von 0,5 g Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80° C bis zu einem Epoxidwert von praktisch 0 reagiert. Der Ansatz wird mit 200 Tlen Propylenglykolmonomethylether verdünnt.

**Ansprüche**

1. Verfahren zur Vernetzung von kationischen Lackbindemitteln, insbesonders von kathodisch abscheidbaren Überzugsmitteln, durch blockierte Isocyanatgruppen unter Abspaltung des Blockierungsmittels bei erhöhter Temperatur, dadurch gekennzeichnet, daß man als Vernetzungskomponente einen 2-Hydroxyalkylharnstoff, welcher durch vollständige oder partielle Reaktion einer organischen Di- oder Polyisocyanatverbindung mit einem sekundären β-Hydroxyalkylamin erhalten wurde, einsetzt, wobei gegebenenfalls die bei der partiellen Umsetzung freigebliebenen Isocyanatgruppen mit NCO-reaktiven Gruppen des Bindemittelpartners unter Bildung eines selbstvernetzenden Bindemittels umgesetzt werden.

2. Verfahren nach Anspruch 1, dadurch gekennzeichnet, daß man als sekundäre β-Hydroxyalkylamine N-Alkylalkanolamine einsetzt.

3. Verfahren nach Anspruch 1, dadurch gekennzeichnet, daß man als sekundäre β-Hydroxyalkylamine Umsetzungsprodukte von Monoepoxidverbindungen mit primären Aminen einsetzt.

4. Kationische Lackbindemittel, dadurch gekennzeichnet, daß sie mit sekundärem β-Hydroxyalkylaminen blokkierte Isocyanatverbindungen als Vernetzungskomponente in Mischung oder als partielles Reaktionsprodukt mit dem Bindemittelpartner enthalten.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-4 409 381 (J.W. HOLUBKA) * Ansprüche 1-3,5-8; Spalte 4, Zeilen 48-52 * --- | 1,2 | C 09 D 5/44 |
| Y | EP-A-0 125 438 (BASF) * Ansprüche 1,2; Seite 4, Zeilen 39-43; Seite 5, Zeilen 1-3 * --- | 1,2 | |
| A | EP-A-0 068 220 (MOBAG CHEMICAL CORP.) * Anspruch 1; Seite 7, Beispiele 1-4 * ----- | 1 | |

RECHERCHIERTE
SACHGEBIETE (Int. Cl.4)

C 09 D
C 08 G

Der vorliegende Recherchenbericht wurde für alle Patentansprüche erstellt

| Recherchenort | Abschlußdatum der Recherche | Prüfer |
|---|---|---|
| DEN HAAG | 30-03-1989 | BUSCAGLIONE Y. |